Europäisches Patentamt

(19) European Patent Office

Office européen des brevets

(11) Numéro de publication: **0 042 523**
**A2**

(12) **DEMANDE DE BREVET EUROPEEN**

(21) Numéro de dépôt: **81104361.1**

(22) Date de dépôt: **05.06.81**

(51) Int. Cl.³: **F 16 K 11/06**
**F 16 K 47/02**

(30) Priorité: **23.06.80 FR 8013880**

(43) Date de publication de la demande:
**30.12.81 Bulletin 81/52**

(84) Etats contractants désignés:
**BE CH DE FR GB IT LI**

(71) Demandeur: **PONT-A-MOUSSON S.A.**
**91, Avenue de la Libération**
**F-54017 Nzb)fr)**

(72) Inventeur: **Deloste, Daniel**
**6 Allée Courbet**
**F-93250 Villemonble(FR)**

(72) Inventeur: **Dillon, Jacques**
**3 Allée Pierre Lallement**
**Pré Latour F-54700 Pont à Mousson(FR)**

(72) Inventeur: **Segondy, Alain**
**6 rue des Romains**
**Aulny F-57157 Marly(FR)**

(72) Inventeur: **Thauvin, Bernard**
**83 rue Raymond Poincaré**
**F-54000 Nancy(FR)**

(74) Mandataire: **Guy, Claude et al,**
**c/o Centre de Recherches de Pont-à-Mousson BP 28**
**F-54700 Pont-à-Mousson(FR)**

(54) **Mitigeur sanitaire.**

(57) Dans ce mitigeur à trois plaquettes en céramique (3,4,5), les plaquettes de réglage (4,5) sont toutes deux mobiles en rotation par rapport à la plaquette fixe (3). Le dispositif de commande est ainsi simple et peu encombrant tout en garantissant une indépendance totale du réglage de la température de l'eau et du réglage du débit d'eau mélangée.

FIG.1

EP 0 042 523 A2

1

## Mitigeur sanitaire

La présente invention concerne un mitigeur d'eau chaude et d'eau froide sanitaire du type comportant trois plaquettes empilées munies d'orifices pouvant, d'une plaquette à l'autre, communiquer entre eux avec des recouvrements variables, dont une plaquette de base fixe comportant des orifices d'alimentation en eau chaude et eau froide, une plaquette de réglage de température et une plaquette de réglage de débit de l'eau mélangée, et un moyen de positionnement des plaquettes les unes par rapport aux autres.

Un tel mitigeur est dit monocommande lorsqu'un moyen unique de commande manuelle mécanique permet, d'une part, de modifier la proportion eau chaude/eau froide pour régler la température de l'eau mélangée ainsi obtenue, et, d'autre part, de régler le débit d'eau mélangée. Il est dit bicommande lorsque ce moyen de positionnement est constitué de deux dispositifs de commande manuelle mécanique séparés assurant ces mêmes fonctions.

On utilise déjà depuis un certain temps des organes de réglage constitués de plaquettes, généralement en céramique, pourvues d'orifices pour le passage dans un même sens de l'eau chaude et de l'eau froide et éventuellement pour le passage en sens inverse de l'eau mélangée obtenue.

Dans un premier type connu de mitigeur sanitaire monocommande à plaquettes en céramique, on utilise deux de ces plaquettes. L'une est fixe et comporte les orifices d'alimentation en eau chaude et en eau froide, et l'autre, disposée contre la précédente, comporte un orifice unique pouvant communiquer avec les deux orifices de la plaquette précédente et est mobile soit en translation suivant deux directions perpendiculaires, soit en translation et en rotation afin de communiquer plus ou moins avec les orifices d'alimentation prévus sur la plaquette fixe et d'obtenir ainsi, lors d'un mouvement, le réglage de la température et, lors de l'autre mouvement, le réglage du débit.

2

De tels dispositifs sont très simples. Cependant, en raison de la commande unique des deux mouvements et de l'utilisation d'une seule plaquette mobile, il existe une certaine dépendance entre le réglage du débit et le réglage de la température, et il n'est pas exclu, sauf dans les cas où l'on fait appel à une commande complexe, que, lors du réglage du débit, la température ne soit pas maintenue à la valeur souhaitée ou, inversement, que lors du réglage de la température, le débit ne soit pas maintenu à la valeur souhaitée, ce qui dans les deux cas entraîne un désagrément pour l'utilisateur.

Pour résoudre ce problème de l'interaction réglage de débit-réglage de température, on a déjà proposé des mitigeurs sanitaires du type indiqué plus haut, c'est-à-dire comportant trois plaquettes, à savoir une plaquette de base ou siège, fixe, comportant les orifices d'alimentation en eau chaude et en eau froide et éventuellement un orifice pour le retour de l'eau mélangée, une plaquette pour le réglage de la température de l'eau mélangée et une plaquette pour le réglage du débit d'eau mélangée.

Dans un mitigeur connu de ce type, la plaquette de réglage de la température de l'eau mélangée est mobile en rotation tandis que la plaquette de réglage du débit est mobile en translation. Cette construction conduit à des encombrements qui ne sont pas toujours compatibles avec le volume offert pour certains corps de robinet et, d'autre part, elle met en oeuvre un dispositif de commande relativement compliqué donc coûteux. Ces inconvénients réduisent l'intérêt présenté par ce type de mitigeur, à savoir d'assurer une indépendance totale entre les deux réglages.

L'invention a pour but de fournir un mitigeur sanitaire du type à trois plaquettes dont le mécanisme de réglage de température et de débit soit plus compact et qui permette d'utiliser un moyen de commande plus simple que dans les constructions connues mentionnées ci-dessus.

A cet effet, l'invention a pour objet un mitigeur sanitaire du type précité, caractérisé en ce que les plaquettes de réglage de température et de réglage de débit d'eau mélangée sont toutes deux mobiles en rotation par rapport à la plaquette fixe.

Pour obtenir ce résultat, de façon avantageuse, le moyen de commande est un levier unique monté rotatif autour d'axes perpendiculaires, sa rotation autour d'un de ces axes entraînant conjointement les deux plaquettes mobiles et sa rotation autour d'un autre axe entraînant seulement en rotation l'une de ces deux plaquettes.

D'autres caractéristiques et avantages de l'invention apparaîtront à la lecture de la description ci-après, faite en référence aux dessins annexés donnés uniquement à titre d'exemple non limitatif et parmi lesquels :

- la Fig. 1 est une vue en coupe longitudinale d'un premier exemple de réalisation du mitigeur suivant l'invention ;

- la Fig. 2 est une vue en perspective de certains organes de ce mitigeur ;

- la Fig. 3 est une vue de dessus d'une douille porteplaquette faisant partie du mitigeur ;

- la Fig. 4 est une vue en coupe axiale prise suivant la ligne 4-4 de la Fig. 3 ;

- les Fig. 5 à 7 sont des vues en coupe transversale prises respectivement suivant les lignes 5-5 à 7-7 de la Fig. 4 ;

- les Fig. 8 et 9 sont respectivement des vues de dessus et de dessous d'un organe d'entraînement de la plaquette de réglage de la température faisant partie du mitigeur ;

- la Fig. 10 est une vue en coupe prise suivant la ligne 10-10 de la Fig. 8 ;

- la Fig. 11 est une vue en coupe prise suivant la ligne 11-11 de la Fig. 10 ;

- la Fig. 12 est une vue de dessus d'une autre pièce du mitigeur ;

- la Fig. 13 est une vue de dessous d'un croisillon de commande du mitigeur ;

- la Fig. 14 est une vue prise en coupe suivant la ligne 14-14 de la Fig. 13 ;

- la Fig. 15 est une vue de côté du levier de manoeuvre du mitigeur ;

- la Fig. 16 est une vue partielle du mitigeur prise en coupe transversale au niveau de la face supérieure de la plaquette fixe, suivant la ligne 16-16 de la Fig. 1 ;

- les Fig. 17a, 17b et 17c sont des vues en coupe analogues prises au niveau de la face supérieure de la plaquette de réglage de température suivant la ligne 17-17 de la Fig. 1, pour trois positions différentes de cette plaquette ;

- les Fig. 18a, 18b et 18c sont des vues en coupe analogues prises au niveau de la face supérieure de la plaquette de réglage de débit, suivant la ligne 18-18 de la Fig. 1, pour trois positions différentes de cette plaquette ;

- la Fig. 19 est une vue de dessus à plus grande échelle d'une variante de la plaquette de réglage de débit ;

- la Fig. 20 est une vue analogue de la plaquette de réglage de température ;

- la Fig. 21 est une vue de dessus à encore plus grande échelle des plaquettes de réglage de température et de débit des Fig. 19 et 20, pour un faible débit d'écoulement d'eau mélangée ;

- la Fig. 22 est une vue partielle en perspective d'une variante de mélangeur suivant l'invention, muni de garnitures anti-bruit en métal déployé ;

- la Fig. 23 est une autre vue en perspective de la garniture anti-bruit en métal déployé de la Fig. 22, et

- la Fig. 24 est une vue en coupe d'une variante du croisillon de commande ;

- la Fig. 25 est une vue en coupe longitudinale d'un deuxième exemple de réalisation du mitigeur suivant l'invention ;

- la Fig. 26 est une vue en perspective de certains organes de ce mitigeur.

5

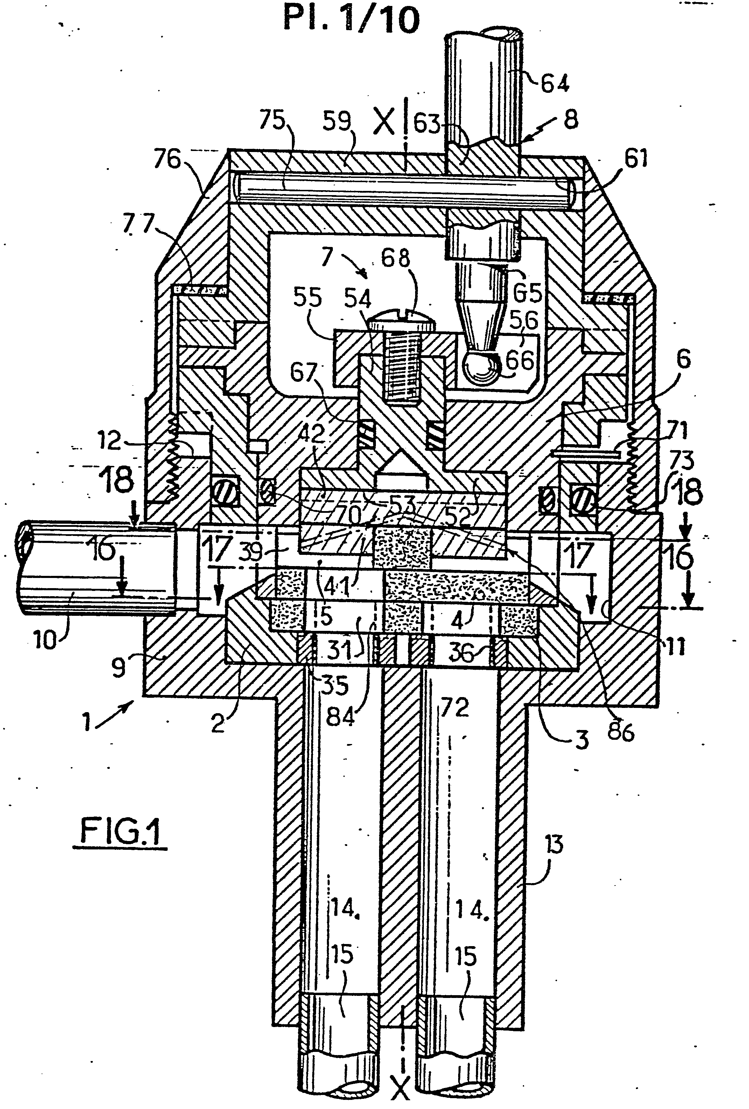

Un premier exemple de réalisation du mitigeur sanitaire est représenté aux Fig. 1 à 15. Il possède un axe général de révolution X-X supposé vertical et se compose essentiellement d'un corps 1 dans lequel sont logés une douille fixe 2, trois plaquettes superposées 3 à 5 en céramique, dont une plaquette fixe 3 et deux plaquettes mobiles 4 et 5, un manchon 6 d'entraînement en rotation simultanée des plaquettes 4 et 5, un dispositif 7 d'entraînement en rotation de la plaquette 5 seule, et un levier de commande unique 8.

Le corps 1 comporte une cuvette 9 ouverte vers le haut et munie d'un bec déverseur radial 10 débouchant dans une gorge annulaire intérieure 11 de cette cuvette. L'extrêmité supérieure de la paroi cylindrique de la cuvette 9, de diamètre extérieur réduit, est extérieurement filetée et comporte une encoche 12. Du fond de cette même cuvette 9 part vers le bas un fût 13 venu de matière percé de deux conduits verticaux 14 dans lesquels arrivent les canalisations 15 d'alimentation en eau chaude et en eau froide.

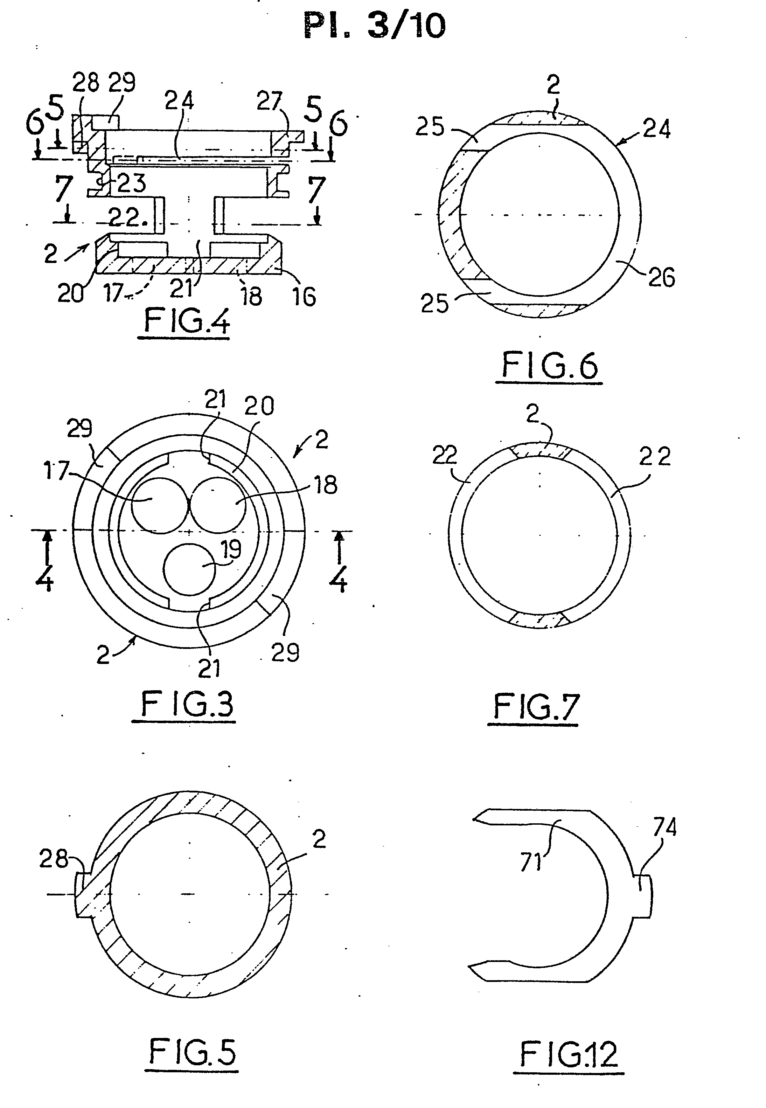

La douille fixe 2 est également ouverte vers le haut. Comme on le voit aux Fig. 3 à 7, elle comporte un fond plan 16 percé de trois orifices circulaires 17 à 19, et une paroi latérale de forme générale cylindrique. A partir du fond 16, on trouve dans celle-ci, de bas en haut :

- une surépaisseur intérieure périphérique 20 interrompue par deux encoches 21 diamétralement opposées ;

- deux fentes 22 diamétralement opposées s'étendant chacune sur environ 140°, d'une encoche 21 à l'autre ;

- une gorge extérieure 23 ;

- un évidement 24 de faible épaisseur, en forme de U, débouchant à l'extérieur par deux petites fentes 25 et une grande fente opposée 26, et

- une collerette extérieure 27 munie d'un tenon 28 en saillie vers le bas et de deux ergots 29 en arc de cercle, en saillie vers le haut, diamétralement opposés et couvrant chacun un angle de 45°.

6

La plaquette fixe 3 est un disque circulaire reçu sans jeu au fond de la douille 2, à l'intérieur de la surépaisseur 20 de celle-ci. Ce disque, dont la face supérieure est rectifiée, rodée et polie, est percé de deux lumières excentrées 31 qui débouchent sur la face inférieure de la plaquette par des orifices circulaires et sur sa face supérieure par des secteurs circulaires à peu près coaxiaux à la plaquette, d'ouverture 90° et à angles arrondis, un côté de chaque secteur étant parallèle et adjacent à un côté de l'autre. Le positionnement des lumières 31 au-dessus des orifices 17 et 18 de la douille 2, qui ont un diamètre légèrement plus grand, est assuré au moyen de deux languettes diamétralement opposées 32 reçues dans les encoches 21 de la douille 2.

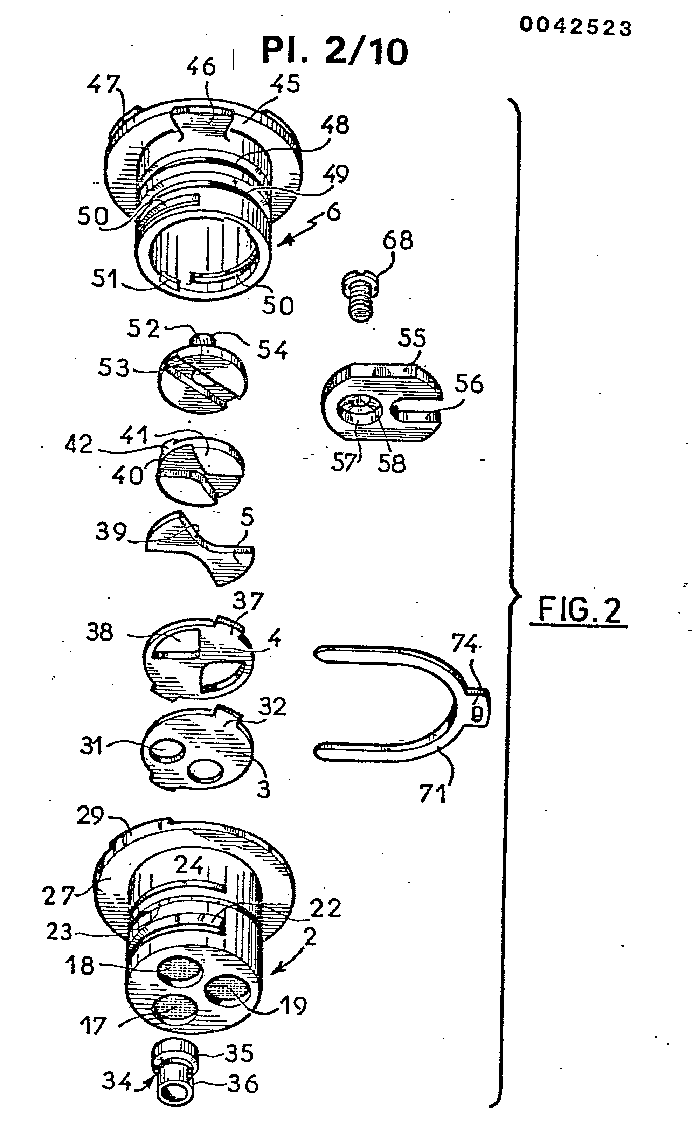

Un joint d'étanchéité 34 constitué par une bague en matière élastique 35 chemisée intérieurement par une bague rigide mince 36 est disposé dans chacun des orifices 17 à 19 de la douille 2. Ces trois joints, dont un a été représenté en vue éclatée à la Fig. 2, assurent l'étanchéité entre le corps 1, la douille 2 et la plaquette fixe 3, ainsi que la stabilité de cette dernière grâce aux trois points de contact ainsi créés, qui définissent un plan.

La plaquette intermédiaire 4, qui sert au réglage de la température de l'eau mélangée, a la même forme que la plaquette 3, à savoir la forme d'un disque d'épaisseur constante d'où font saillie deux languettes 37 diamétralement opposées ; ses deux faces sont rectifiées, rodées et polies. Deux ouvertures 38 en forme de secteurs circulaires d'ouverture 90°, à angles arrondis, opposés par leurs sommets, sont ménagées dans la plaquette 4.

La plaquette supérieure 5 est une plaquette de réglage du débit de l'eau mélangée ; sa face inférieure est rectifiée, rodée et polie. Elle comporte à partir de sa périphérie deux échancrures 39 d'ouverture 90°, diamétralement opposées, dont l'angle au sommet est arrondi, ce qui lui confère une forme en diabolo. Cette plaquette 5 est encastrée dans un évidement conjugué 40, de profondeur inférieure à l'épaisseur de la plaquette, d'un disque 41 dont la face supérieure porte une languette 42 visible sur la Fig. 1.

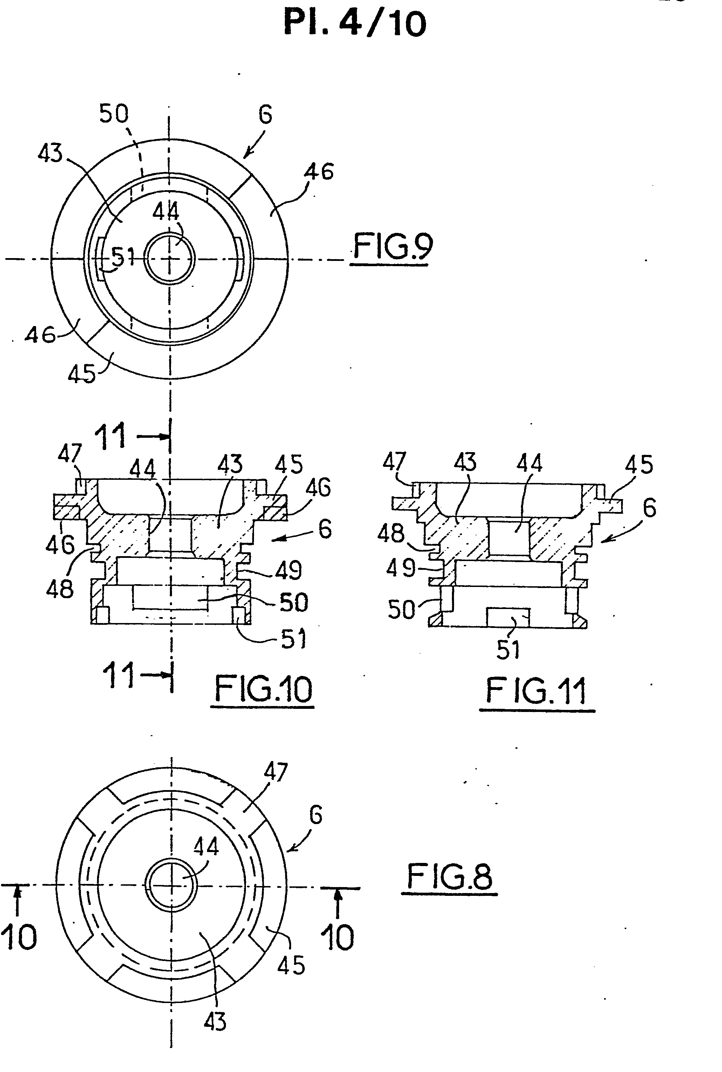

Le manchon 6 d'entraînement (Fig. 8 à 11) présente à peu près à mi-hauteur une collerette intérieure 43 percée d'un orifice central circulaire 44, et, à son extrémité supérieure, une collerette extérieure 45. De cette dernière partent vers le bas deux ergots 46 diamétralement opposés et couvrant chacun un angle de 45° et, vers le haut, quatre ergots 47, à 90°, les uns des autres. Il est prévu une gorge extérieure 48 au niveau de la collerette 43 et, sous celle-ci, une autre gorge extérieure 49, puis deux fentes 50 diamétralement opposées s'étendant chacune sur environ 60°, et enfin deux encoches intérieures 51 diamétralement opposées, conjuguées des languettes 37 de la plaquette intermédiaire 4.

Le dispositif d'entraînement en rotation de la plaquette 5 comprend un disque 52 qui présente dans sa face inférieure une rainure diamétrale 53 recevant sans jeu la languette 42 du disque 41 et sur la face supérieure duquel fait saillie un axe 54 dont l'extrémité supérieure est cannelée.

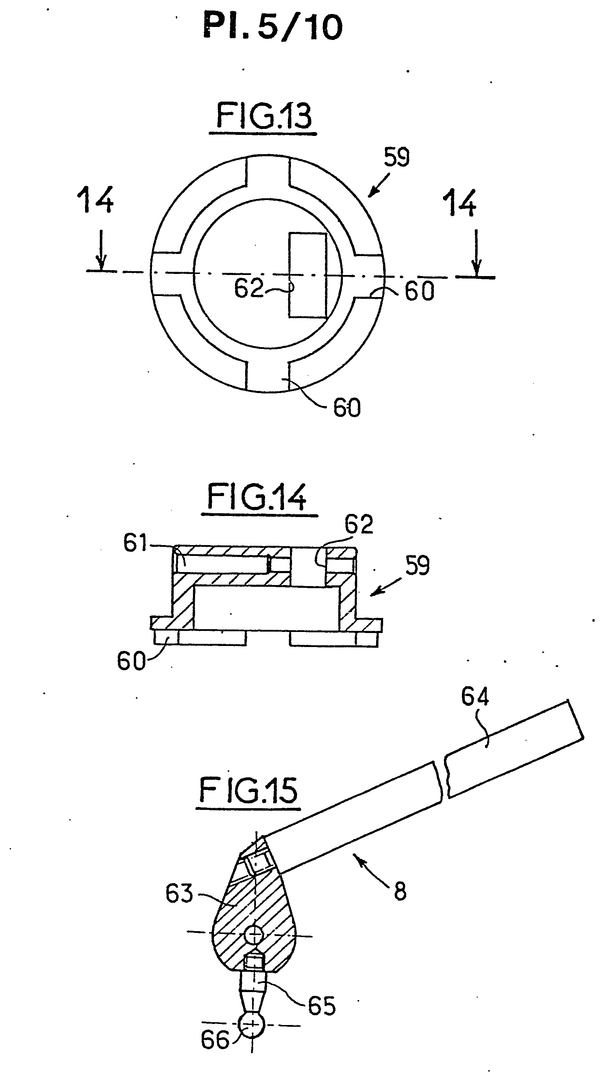

Le dispositif 7 comprend également une fourchette 55 plane de forme ovale présentant à une extrémité une encoche longitudinale 56 et, près de son autre extrémité, un contre-alésage cannelé 57 ouvert vers le bas dans lequel débouche un trou à vis 58 de plus petit diamètre. Le dispositif 7 est complété par un croisillon 59 en coupelle renversée (Fig. 13 et 14) dont la jupe périphérique est pourvue à son extrémité libre de quatre encoches 60 conjuguées des tenons 47 du manchon 6. Dans le fond du croisillon sont usinés un perçage diamétral horizontal 61 et une lumière verticale 62 de forme rectangulaire qui croise ce dernier.

Le levier de manoeuvre 8 comprend un corps 63 à section horizontale rectangulaire de même largeur que la lumière 62 du croisillon 59 et une poignée supérieure oblique

8

64. Dans la face inférieure du corps 63 est vissé un doigt 65 se terminant par une boule 66.

On décrira maintenant l'assemblage du mitigeur.

On assemble les trois pièces 5, 41 et 52 par encastrement ; on enfile l'axe 54 à travers le trou 44 du manchon 6, avec interposition d'un joint d'étanchéité torique 67 ; on coiffe cet axe avec la fourchette 55, que l'on fixe au moyen d'une vis 68 engagée dans le trou 58 de cette fourchette et dans un trou fileté ménagé dans l'axe 54.

On encastre ensuite les languettes 37 de la plaquette 4 dans les encoches 51 du manchon 6, et on enfile ce dernier dans la douille 2. La plaquette 4 est alors au contact des deux autres plaquettes 3 et 5, et les fentes 50 du manchon 6 correspondent en niveau et en épaisseur aux fentes 22 de la douille 2. De même, la gorge 48 du manchon se trouve en regard de l'évidement 24 de la douille. Un joint torique 70 reçu dans la gorge 49 du manchon assure l'étanchéité entre les parois latérales de celui-ci et celle de la douille 2.

Une pièce 71 en forme de fourche, représentée aux Fig. 2 et 12, est insérée horizontalement dans l'évidement 24 et dans la gorge 48, ce qui solidarise en translation axiale les pièces 6 et 2 tout en leur permettant de tourner l'une par rapport à l'autre.

L'ensemble ainsi formé est inséré, sans jeu, dans la cuvette 9 du corps 1. Lorsqu'il est en place, le fond 16 de la douille 2 s'applique sur celui de la cuvette 9, le tenon 28 est reçu sans jeu dans l'encoche 12 de celle-ci, et les orifices 17 et 18 coïncident avec les orifices de sortie 72 des conduits 14 du corps 1, quoique ces derniers orifices aient un diamètre légèrement inférieur. L'orifice 19 reste obturé par le fond de la cuvette 9. Les fentes 22 correspondent en niveau et en épaisseur à la gorge périphérique 11 de la cuvette 9. Un joint torique 73 logé dans la gorge 23 de la douille 2 assure l'étanchéité entre les parois latérales de cette dernière

9

et de la cuvette 9. L'immobilisation en rotation de la douille 2 est assurée, d'une part, par le tenon 28, d'autre part, par une saillie 74 de la pièce 71, diamétralement opposée à ce tenon, qui est reçue dans un évidement conjugué du corps 1.

Le corps 63 du levier 8 est inséré dans la lumière 62 du croisillon et articulé dans celle-ci au moyen d'un axe 75 enfilé dans l'alésage 61. L'ensemble vient coiffer le manchon 6 de façon que la boule 66 s'engage dans l'encoche 56 de la fourchette et que les ergots 47 du manchon soient reçus dans les encoches 60 du croisillon. Enfin, un écrou 76 muni d'un joint 77 plat en matière à faible coefficient de frottement s'appuyant sur un épaulement extérieur du croisillon 59, est vissé sur la cuvette 9 du corps 1, assurant la fermeture et le maintien en place des pièces constitutives du mitigeur.

On va maintenant décrire le fonctionnement du mitigeur en faisant référence aux Fig. 1 et 16 à 22.

Les mouvements des plaquettes 4 et 5 sont obtenus par l'intermédiaire de l'unique levier 8, qui est mobile en rotation autour d'axes orthogonaux : l'un de ces axes est l'axe X-X. Pour chaque position du levier 8 et du croisillon 59 autour de cet axe, l'autre axe de rotation du levier est l'axe horizontal 75, ce qui correspond à un mouvement du levier 8 dans un plan vertical perpendiculaire à l'axe 75 de rotation et excentré par rapport au mitigeur.

On supposera tout d'abord le levier 8 dans une position angulaire donnée autour de l'axe 75.

La manoeuvre du levier 8 en rotation par un mouvement horizontal autour de l'axe X-X entraîne le croisillon 59 par l'intermédiaire de l'axe 75. Le croisillon 59 étant en prise avec le manchon d'entraînement 6 par les quatre ergots 47 logés dans les quatre encoches 60, ce manchon est entraîné en rotation, ce qui a pour effet d'entraîner en rotation la plaquette intermédiaire 4. Mais comme la position angulaire du levier 8 autour de l'axe 75 est fixe, il

10

en est de même de la position de la boule 66, de la fourchette 55 et de l'ensemble 52-41-5 par rapport au manchon 6. Par conséquent, la plaquette supérieure 5 est elle aussi entraînée en rotation autour de l'axe X-X. Ceci est favorisé par l'effet d'adhérence résultant de l'état de surface des faces en contact des plaquettes 4 et 5.

En d'autres termes, tout l'équipage mobile du mitigeur tourne d'un seul bloc autour de l'axe X-X, la rotation étant limitée à un quart de tour par les ergots 46 du manchon 6 venant en butée contre les ergots 29 de la douille 2.

Différentes positions de la plaquette 4 de réglage de température sont représentées aux Fig. 17a à 17c.

La Fig. 17a montre la position de la plaquette 4 pour laquelle l'orifice 72 d'arrivée d'eau froide est complètement fermé : il y a seulement écoulement d'eau chaude. La Fig. 17b montre la position de la plaquette 4 pour laquelle les sections de passage d'eau froide et d'eau chaude sont égales, ce qui procure une eau mélangée contenant moitié d'eau chaude, moitié d'eau froide. La Fig. 17c montre la position de la plaquette 4 pour laquelle l'orifice 72 d'arrivée d'eau chaude est complètement fermé : il y a seulement écoulement d'eau froide.

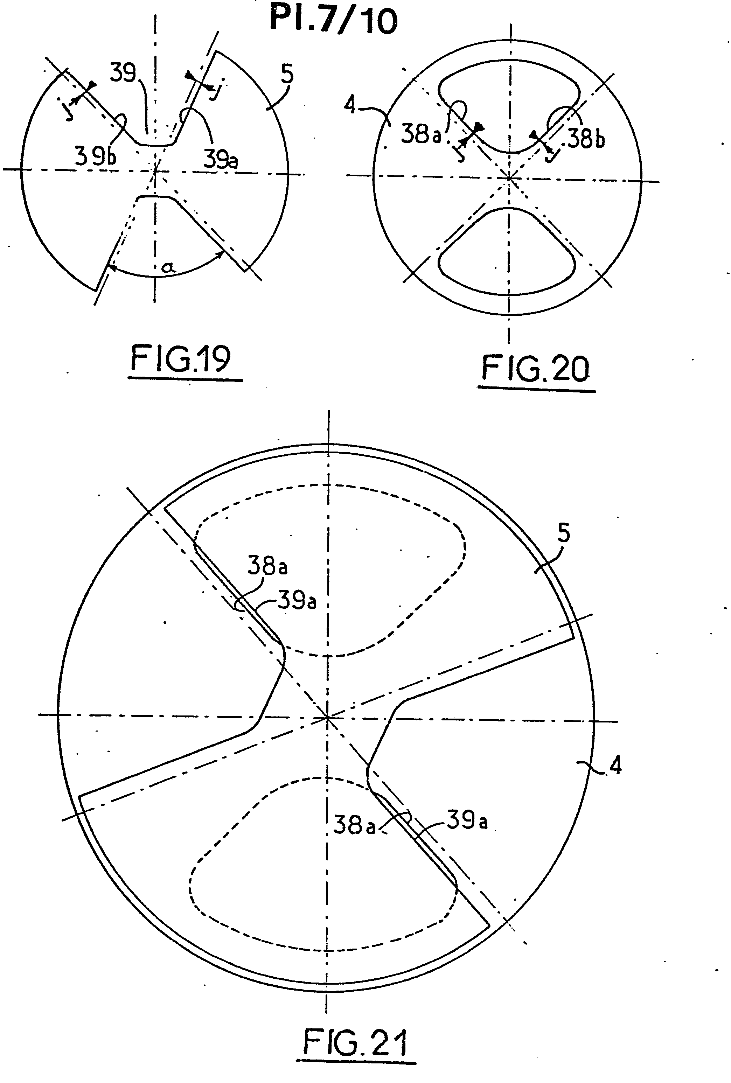

Il apparaît, en comparant les Fig. 17 et 19, qu'une rotation d'un quart de tour de la plaquette 4 permet de passer d'un écoulement d'eau chaude seule à un écoulement d'eau froide seule.

La manoeuvre du levier 8 en rotation autour de l'axe 75 dans un plan vertical ne modifie pas la position angulaire du manchon 6 autour de l'axe X-X mais se traduit par un mouvement semblable du doigt de commande 65, dont l'extrémité 66 en forme de sphère entraîne la fourchette 55 en un mouvement de rotation dans le plan horizontal autour de l'axe X-X. La fourchette 55 transmet son mouvement de rotation à la plaquette de réglage de débit 5 par l'intermédiaire des pièces 52 et 41. Ce mouvement de rotation s'effectue par rapport au manchon 6 et à la plaquette de

11

réglage de température 4.

Les petits côtés de la lumière 62 ménagée dans le croisillon de commande 59 limitent la rotation du levier dans un plan vertical en servant de butée au corps 63. Le dimensionnement est tel que la manoeuvre d'une position extrême à l'autre du levier 8 dans le plan vertical se traduit par une rotation d'un quart de tour de la fourchette 55 et par conséquent par une rotation de même amplitude de la plaquette 5.

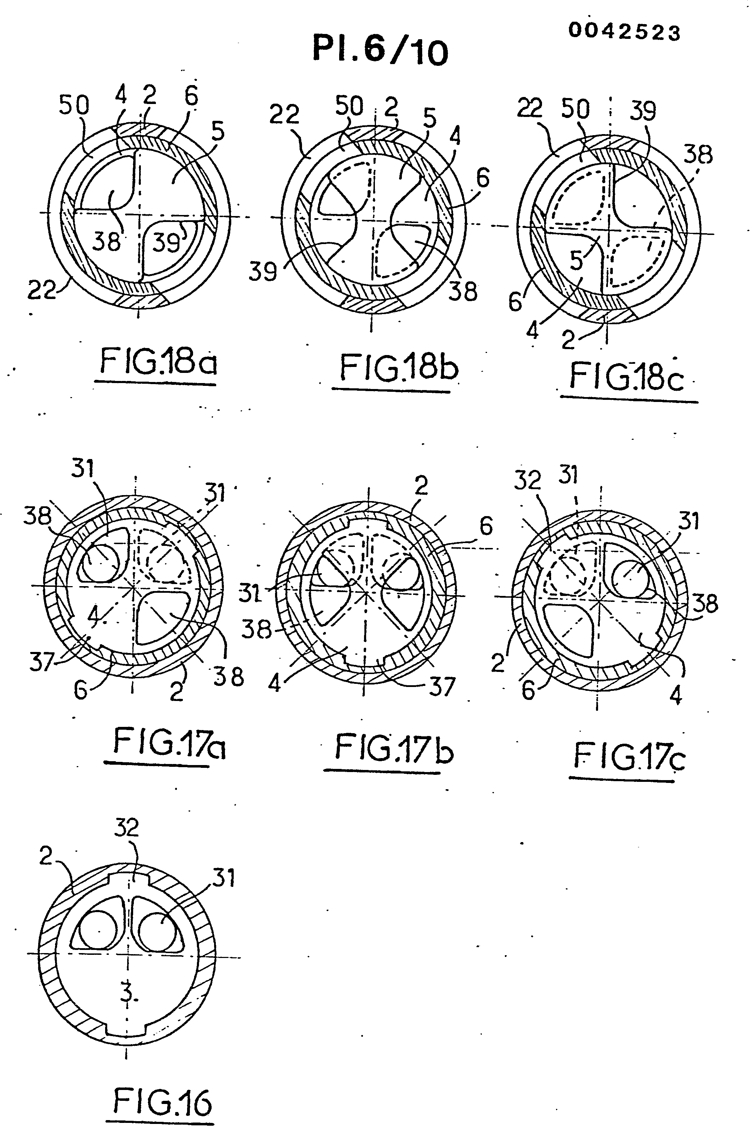

Différentes positions de la plaquette de réglage 5 par rapport à la plaquette 4 sont représentées aux Fig. 18a à 18c.

Sur la Fig. 18a, la plaquette de réglage de débit 5 laisse entièrement à découvert les orifices 38 de la plaquette 4, ce qui procure le débit maximal d'eau mélangée. Sur la Fig. 18b, la plaquette 5 a tourné de 45° dans le sens trigonométrique, occultant environ la moitié des orifices 38, ce qui ne laisse plus passer que la moitié du débit maximal d'eau mélangée. Sur la Fig. 18c, une rotation supplémentaire de 45° dans le sens trigonométrique de la plaquette 5 obture complètement les orifices 38 : il n'y a plus aucun écoulement.

Il apparaît, en comparant les Fig. 18a et 18c, qu'une rotation d'un quart de tour de la plaquette 5 permet de passer du débit maximal à la fermeture complète.

Sur ces Fig. 18a à 18c, la plaquette 4 est représentée en position correspondant au passage de l'eau chaude seule, mais il est clair que les mêmes phénomènes se produisent quelle que soit la position de cette plaquette 4.

Dans chaque position des deux plaquettes 4 et 5, le courant d'eau mélangée sortant des orifices 38 de la plaquette 4 heurte la face inférieure de la pièce 41 et est dévié par celle-ci à angle droit pour sortir radialement par les fentes 50 et 22 et parvenir dans la gorge 11 du corps 1 et, de là, dans le bec déverseur 10. La plaquette 4 réalise le réglage de la température de l'eau mélangée par modification de la proportion d'eau chaude et d'eau froide admise, tandis que la plaquette 5 modifie, sans intervenir sur les proportions, le débit d'ensemble d'eau chaude et d'eau froide admis pour constituer le débit d'eau mélangée.

Il résulte de cette description du fonctionnement que la manoeuvre du levier 8 de bas en haut et de haut en bas dans un plan vertical permet le réglage du débit de l'eau mélangée, et que la manoeuvre en rotation autour de l'axe X-X du même levier 8 permet le réglage de la température de l'eau mélangée distribuée. Pour un débit donné, la rotation du levier 8 dans le sens des aiguilles d'une montre permet d'obtenir de l'eau de plus en plus chaude.

Diverses variantes de l'invention peuvent être envisagées ; on peut notamment, en conservant le principe de base d'un dispositif comprenant trois plaquettes dont une fixe et deux mobiles en rotation dont chacune réalise sa propre fonction de réglage (température ou débit), envisager une forme différente pour la plaquette de réglage de débit 5, par exemple celle représentée sur la Fig. 19, où l'on peut voir que l'ouverture $\underline{a}$ des échancrures 39 est un peu inférieure à 90°, ce qui provoque, lors de la fermeture complète du mitigeur, un recouvrement plus important de la plaquette 4 par la plaquette 5, améliorant ainsi l'étanchéité entre ces deux plaquettes.

En outre, les faces verticales $39^a$ et $39^b$ de chaque échancrure 39 de la plaquette de réglage de débit 5 sont décalées parallèlement au rayon correspondant d'une distance $\underline{j}$ dans le sens circonférentiel, tandis que les faces verticales $38^a$ et $38^b$ de chaque orifice 38 de la plaquette 4 sont elles aussi décalées parallèlement aux rayons correspondants de la même distance $\underline{j}$ (voir Fig. 20), mais l'une vers l'autre. Il en résulte que, lors de la quasi-fermeture des orifices 38 par le déplacement en rotation dans le sens direct de la plaquette 5, les faces verticales $38^a$ des orifices 38 sont sensiblement parallèles aux faces verticales $39^a$ des échancrures 39 (Fig.

21), ce qui a pour effet de réduire de façon très sensible le bruit d'écoulement de l'eau, toujours important au moment de la fermeture. Il en est de même lors de l'ouverture du mitigeur par une rotation de la plaquette 5 en sens inverse.

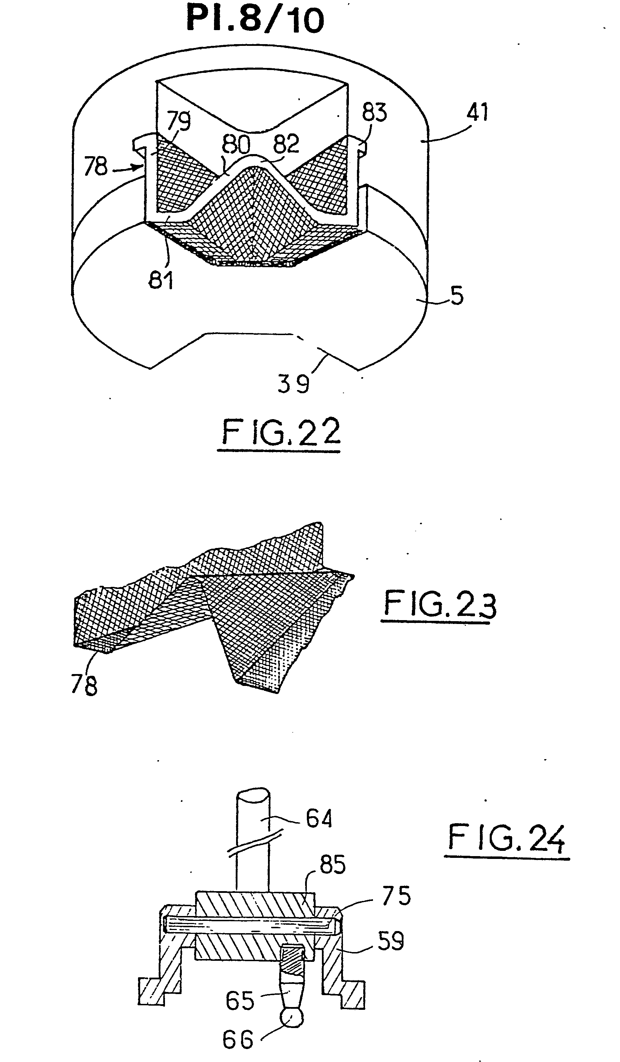

Il est envisageable également, dans le but d'éliminer les bruits d'écoulement, aux faibles débits particulièrement, de munir chaque échancrure 39 de la plaquette de réglage de débit 5 d'un élément 78 en grillage, par exemple en métal déployé à fin maillage (voir Fig. 22 et 23), ayant en section la forme d'un W dont les branches extrêmes 79 sont verticales et dont les branches centrales inclinées 80 sont reliées aux précédentes par des parties horizontales 81 de largeur à peu près constante situées légèrement au-dessus du plan de la face inférieure de la plaquette 5. L'arête centrale 82 de l'élément 78 est inclinée vers le bas sur l'horizontale en allant de la périphérie de la plaquette 5 vers son centre. L'élément 78 peut être maintenu en position soit par des bords rabattus 83 insérés dans une rainure ménagée dans la pièce 41, soit par surmoulage lors de la fabrication de cette pièce 41. Dans cette variante, la plaquette 5 n'est pas encastrée dans la pièce 41 comme aux Fig. 1 et 2, mais elle possède sur sa face supérieure des évidements en prise sur des tétons de cette pièce 41 pour son entraînement en rotation.

Lors de l'utilisation du mitigeur à faible débit d'écoulement d'eau mélangée, ou lors de la fermeture ou de l'ouverture de celui-ci, ce sont les parties planes 81 des éléments 78 qui se trouvent en regard et à proximité des parties démasquées des orifices 38 de la plaquette 4 sous-jacente, et l'eau sortant de ces orifices doit traverser vers le haut ces parties planes 81 avant d'être déviée par la pièce 41 pour gagner radialement la gorge 11 du corps 1. Ainsi, l'écoulement est divisé en une multitude d'écoulements élémentaires, ce qui a pour conséquence, comme il est bien connu en mécanique des fluides, de diminuer considérablement les bruits créés par le passage de l'eau dans

14

une ouverture de faibles dimensions.

Par contre, lors de l'utilisation du mélangeur à grand ou à plein débit, c'est-à-dire lorsque les problèmes de bruit sont moins aigus, l'arête centrale 82 des éléments 78, qui est en retrait vers le haut par rapport au plan de la face inférieure de la plaquette 5, se trouve sensiblement dans le plan vertical médian des orifices 38 de la plaquette 4, de sorte qu'une grande partie du courant d'eau est déviée radialement sans traverser les éléments 78.

Par conséquent, la section utile de passage offerte à l'eau n'est que très faiblement diminuée par la présence des éléments 78, et ces derniers ne réduisent pas sensiblement le débit du robinet.

Dans le même but, des manchons cylindriques en métal déployé de fin maillage 84 peuvent être disposés dans les orifices d'amenée d'eau chaude et d'eau froide 17, 18 et 31 ménagés dans le fond 16 de la douille fixe 2 et dans la plaquette fixe 3.

Toujours en variante, on peut envisager de ménager un passage 86 dans le disque 41, comme représenté en traits mixtes à la Fig. 1, pour mettre en communication, et donc en équilibre hydraulique, les deux encoches 39 de la plaquette 5. En effet, on a constaté que cette mesure diminue les bruits d'écoulement aux extrémités de la gamme de températures de l'eau mélangée.

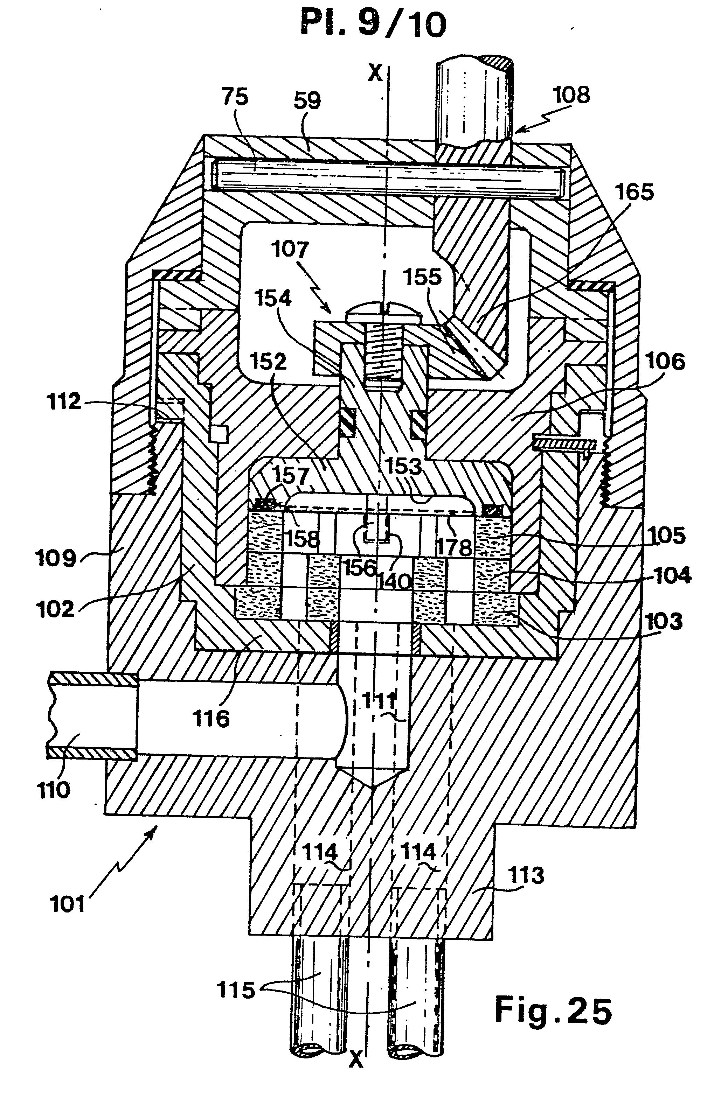

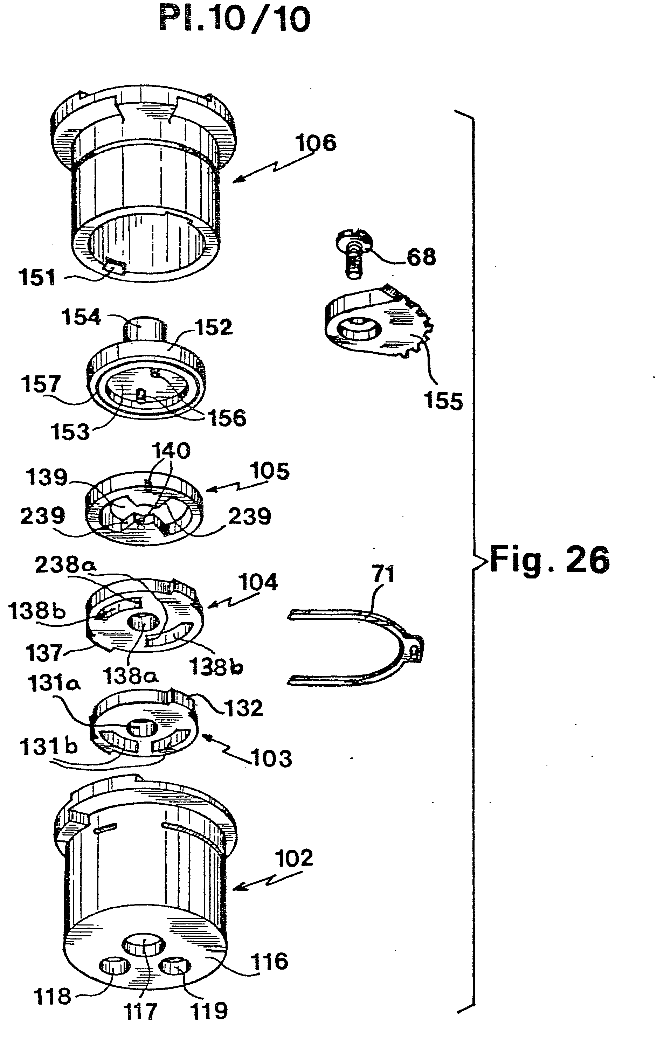

Un deuxième exemple de réalisation représenté sur les Fig. 25 et 26 diffère du premier décrit ci-avant par le fait que la sortie de l'eau mélangée se fait axialement au lieu de se faire latéralement.

Le mitigeur sanitaire représenté aux Fig. 25 et 26 possède un axe général de révolution X-X supposé vertical. Il se compose essentiellement d'un corps 101 dans lequel sont logés une douille fixe 102, trois plaquettes superposées 103 à 105 en céramique, dont une plaquette fixe 103 et deux plaquettes mobiles 104 et 105, un manchon 106 d'entraînement en rotation simultanée des plaquettes 104 et 105, un dispositif 107 d'entraînement en rotation de la plaquette 105 seule et un levier de commande unique 108.

Le corps 101 comporte une cuvette 109 ouverte vers le haut et munie d'un bec déverseur radial 110 débouchant dans un trou borgne 111 d'axe X-X. L'extrémité supérieure de la paroi cylindrique de la cuvette 109, de diamètre extérieur réduit, est extérieurement filetée et comporte une encoche 112. Du fond de cette même cuvette 109 part vers le bas un fût 113 venu de matière percé de deux conduits verticaux 114 dans lesquels arrivent les canalisations 115 d'alimentation en eau chaude et en eau froide.

La douille fixe 102 est également ouverte vers le haut. Elle comporte, comme on le voit à la Fig. 26, un fond plan 116 percé de trois orifices circulaires 117 à 119, l'orifice 117 étant centré sur l'axe X-X, les orifices 118 et 119 étant excentrés et voisins l'un de l'autre, et une paroi latérale de forme générale cylindrique. La douille fixe 102 a la même structure que la douille correspondante 2 décrite dans le premier exemple de réalisation, toutefois elle ne comporte ni la gorge extérieure référencée 23, ni les deux fentes 22.

La plaquette fixe 103 est un disque circulaire reçu sans jeu au fond de la douille 102, à l'intérieur de la surépaisseur de celle-ci. Ce disque, dont la face supérieure est rectifiée, rodée et polie, est percé de trois lumières : une circulaire 131a, centrée sur l'axe X-X et deux excentrées 131b en forme de portions d'une même couronne circulaire limitées par deux faces verticales planes, d'ouverture 90°, une face verticale de chaque lumière étant parallèle et adjacente à une face verticale de l'autre. En fait, les lumières 131b correspondent aux lumières 31 en forme de secteurs circulaires de la plaquette fixe 3 du premier exemple de réalisation amputées de leurs parties centrales, afin de dégager la place nécessaire à la lumière circulaire 131a. Le positionnement des lumières 131a et 131b au-dessus des orifices correspondants 117, 118 et 119 est assuré au moyen de deux languettes diamé-

16

tralement opposées 132 reçues dans des encoches de la douille 102, comme décrit dans le premier exemple de réalisation.

Un joint d'étanchéité identique à celui référencé 34 précédemment est disposé dans chacun des orifices 117 à 119 de la douille 102 et assure les mêmes fonctions.

La plaquette intermédiaire 104 qui sert au réglage de la température de l'eau mélangée a la forme d'un disque d'épaisseur constante d'où font saillies deux languettes 137 diamétralement opposées ; ses deux faces sont rectifiées, rodées et polies. Trois ouvertures 138a et 138b sont ménagées dans la plaquette. La première 138a est circulaire, centrée sur l'axe X-X, les deux autres 138b en forme de portions d'une même couronne circulaire limitées par deux faces verticales planes, d'ouverture 90°, sont symétriques par rapport au centre. Ici aussi, les ouvertures 138b correspondent aux ouvertures 38 en forme de sections circulaires de la plaquette intermédiaire 4 du premier exemple de réalisation, amputées de leurs parties centrales afin de dégager la place nécessaire à l'ouverture circulaire 138a.

La plaquette supérieure 105 est une plaquette de réglage du débit d'eau mélangée, sa face inférieure est rectifiée, rodée, polie. Elle comporte une ouverture 139 constituée de deux portions d'une même couronne circulaire d'ouverture 90° symétriques par rapport à l'axe X-X, réunies par une partie centrale circulaire centrée sur l'axe X-X. Deux trous borgnes 140 diamétralement opposés sont ménagés dans la face supérieure de la plaquette 105.

Le manchon 106 d'entraînement en rotation simultanée des plaquettes 104 et 105 est le même que celui décrit sous la référence 6 dans le premier exemple de réalisation et représenté aux Fig. 8 à 11, à la seule différence qu'il ne comporte ni les fentes 50 diamétralement opposées ni la gorge 49.

Le dispositif d'entraînement en rotation de la plaquette 105 comprend un disque 152 qui présente une cavité circulaire 153 creusée dans sa face inférieure et sur la face supérieure duquel fait saillie un axe 154 dont l'extrémité supérieure est cannelée. Le disque 152 est muni de deux tenons 156 diamétralement opposés s'étendant vers le bas qui s'engagent sans jeu dans les trous borgnes 140 correspondants de la plaquette 105. Un joint d'étanchéité 157 est disposé dans une gorge 158 ménagée à la périphérie du disque 152.

Ce dispositif 107 d'entraînement en rotation de la plaquette 105 seule est identique à celui décrit dans la premier exemple de réalisation référencé 7 et représenté sur les Fig. 1, 13, 14 et 15.

L'assemblage et le fonctionnement du deuxième exemple de réalisation du mitigeur sont exactement les mêmes que ceux décrits précédemment dans le premier exemple de réalisation. Seul le trajet suivi par l'eau à la sortie de la plaquette intermédiaire de réglage de température est différent. En effet, au lieu de sortir latéralement par les fentes 50 comme dans le premier exemple de réalisation, l'eau, défléchie par sa rencontre avec le fond de la cavité 153 du disque 152, s'écoule par les trous centraux 138a et 131a des plaquettes 104 et 103 pour gagner le trou borgne 111 du corps 101 et le bec déverseur 110.

Ce mitigeur, dans son deuxième exemple de réalisation, ne nécessite pas le montage de joints d'étanchéité entre la cuvette 109 et la douille fixe 102, ni entre cette dernière et le manchon 106 d'entraînement car le trajet de l'eau est confiné dans l'empilement des plaquettes 103 à 105 et du disque 152, qui assurent eux-mêmes cette étanchéité.

Diverses variantes peuvent être envisagées.

On peut, comme dans le premier exemple de réalisation, par modification de la forme des ouvertues 139 de la plaquette 105 et des ouvertures 138b de la plaquette 104, arriver à ce que, lors de la quasi fermeture des ouvertures 138b de la plaquette 104 par rotation dans le sens direct de la plaquette 105, les faces 238a rectilignes verticales

18

des ouvertues 138b soient très sensiblement parallèles aux faces verticales rectilignes 239 de l'ouverture 139, dans le même but de réduire de façon très sensible les bruits d'écoulement de l'eau toujours important au moment de la fermeture. Il en est de même lors de l'ouverture du mitigeur.

Il est envisageable également, dans le but d'éliminer les bruits d'écoulement, de disposer un élément 178 en grillage, par exemple en métal déployé à fin maillage dans la cavité 153 du disque 152, au-dessus de la plaquette 105.

L'invention présente un certain nombre d'avantages, et notamment les suivants :

Le fait que le dispositif de réglage de débit et de température soit constitué par trois plaquettes dont deux mobiles en rotation et qu'à chacune des deux plaquettes mobiles 4 et 5 soit assignée une fonction unique (réglage de température pour la plaquette 4, réglage de débit pour la plaquette 5) permet d'éviter toute interaction entre le réglage du débit et le réglage de la température. Il en résulte que l'utilisateur modifiant le débit de l'eau mélangée ne risque pas de voir involontairement modifiée la température de celle-ci et que, inversement, lorsque l'utilisateur a choisi le débit de l'eau mélangée qu'il souhaite, une modification de la température ne perturbe pas ce débit.

Le fonctionnement du mitigeur d'eau chaude et d'eau froide sanitaire de l'invention est relativement simple, puisque, au moyen d'un levier unique, il est possible à la fois de modifier la position angulaire de la plaquette de réglage de température 4 et, pour chaque position de celle-ci, la position angulaire de la plaquette de réglage de débit 5. Il est à noter que l'utilisation de plaquettes en céramique dont les faces en regard sont rodées et polies permet un bon glissement des plaquettes les unes sur les autres et donc d'avoir des efforts d'actionnement réduits, ce en conservant une parfaite étanchéité entre les plaquettes sans avoir recours à des garnitures supplémentaires.

19

Grâce à l'utilisation de deux plaquettes mobiles en rotation, l'ensemble du dispositif de réglage du débit et de la température est compact, d'un faible encombrement, et peut donc être intégré à l'intérieur de pratiquement tous les corps de mitigeurs de dimensions courantes.

Grâce à la forme particulière des orifices 31 et 38 des plaquettes 3 et 4 et des échancrures 39 de la plaquette 5 du premier exemple de réalisation, des orifices 131b et 138b des plaquettes 103 et 104 et de l'ouverture 139 de la plaquette 105 du deuxième exemple de réalisation, la modification de la température ou du débit s'effectue de façon très progressive.

Diverses variantes applicables aux deux exemples de réalisation décrits ci-avant peuvent être envisagées.

On peut remplacer la fourchette 55 et le doigt 65 du dispositif d'entraînement 7 de la plaquette supérieure seule par un pignon conique 155 coopérant avec un second pignon conique 165 solidaire du levier de manoeuvre 108, comme représenté à la Fig. 25.

On peut encore remplacer les trois joints d'étanchéité 34 représentés sur la Fig. 2 par un joint plat unique intercalé entre le fond de la douille 2-102 et celui de la cuvette 9-109 du corps 1-101 et muni de trois extensions cylindriques s'engageant vers le haut dans les trois orifices 17 à 19 et 117 à 109 des douilles 2 et 102.

En variante également, on peut envisager, comme représenté à la Fig. 24, de centrer la poignée de manoeuvre 64 du mitigeur sur l'axe X-X en la fixant sur une pièce intermédiaire 85 remplaçant le corps 63 et portant le doigt de commande 65 en position excentrée.

Enfin, on peut envisager de manoeuvrer ce mitigeur par deux dispositifs de commande séparés au lieu d'un levier unique, l'un, solidaire du croisillon 159, entraînant le manchon 6-106 de mise en rotation simultanée des plaquettes intermédiaire et supérieure, l'autre, solidaire de l'axe 54-154 de la pièce d'entraînement 52-152 en rotation de la plaquette supérieure seule.

20

## - REVENDICATIONS -

1.- Mitigeur sanitaire, du type comportant, montées dans un corps (1-101), trois plaquettes empilées munies d'orifices pouvant, d'une plaquette à l'autre, communiquer entre eux avec des recouvrements variables, dont une plaquette de base fixe (3-103) comportant des orifices d'alimentation en eau chaude et en eau froide, une plaquette de réglage de température (4-104) et une plaquette de réglage de débit de l'eau mélangée (5-105), et un moyen de positionnement des plaquettes les unes par rapport aux autres, caractérisé en ce que les plaquettes de réglage de température (4-104) et de réglage de débit (5-105) sont toutes deux mobiles en rotation par rapport à la plaquette fixe (3-103).

2.- Mitigeur sanitaire suivant la revendication 1, à alimentation par le bas, caractérisé en ce que la plaquette de réglage de débit (5-105) est disposée au-dessus de la plaquette de réglage de température (4-104), elle-même disposée au-dessus de la plaquette fixe (3-103).

3.- Mitigeur sanitaire suivant l'une des revendications 1 et 2, caractérisé en ce que le moyen de positionnement des plaquettes est un levier unique (8-108) monté rotatif autour d'axes perpendiculaires, sa rotation autour d'un de ces axes (X-X) entraînant conjointement les deux plaquettes mobiles (4-104, 5-105) et sa rotation autour d'un autre axe (75) entraînant seulement en rotation l'une (5-105) de ces deux plaquettes.

4.- Mitigeur sanitaire suivant la revendication 3 caractérisé en ce que le levier unique (8-108) est monté rotatif autour d'un axe (75) horizontal porté par un manchon (6-106) dont est solidaire la plaquette mobile inférieure (4-104).

5.- Mitigeur sanitaire suivant la revendication 4 caractérisé en ce que le levier (8-108) porte un doigt (65) attaquant de façon excentrée un organe (55) dont est solidaire l'autre plaquette mobile (5-105).

6.- Mitigeur sanitaire suivant la revendication 4

21

caractérisé en ce que le levier (8-108) porte un pignon conique (165) coopérant avec un pignon conique (155) dont est solidaire l'autre plaquette mobile (5-105)

7.- Mitigeur sanitaire suivant l'une des revendications 1 et 2 caractérisé en ce que le moyen de positionnement des plaquettes est constitué de deux dispositifs de commande séparés, l'un d'entraînement d'un manchon (6-106) dont est solidaire la plaquette mobile inférieure (4-104), l'autre d'entraînement de l'autre plaquette mobile (5-105).

8.- Mitigeur sanitaire suivant l'une quelconque des revendications 4 à 7 caractérisé en ce que la plaquette fixe (3-103) est montée dans une douille fixe (2-102) dans laquelle le manchon (6-106) est monté rotatif mais immobilisé en translation.

9.- Mitigeur suivant l'une quelconque des revendications 1 à 8, caractérisé en ce que trois bagues élastiques (35) sont disposées entre la plaquette fixe (3-103) et le corps (1-101) du mitigeur, deux de ces bagues assurant l'étanchéité vis-à-vis de l'alimentation en eau chaude et en eau froide.

10.- Mitigeur suivant l'une quelconque des revendications 1 à 9 caractérisé en ce que la plaquette mobile supérieure (5) porte une pièce (41-152) d'entraînement en rotation déviant l'eau mélangée vers la sortie du mitigeur.

11.- Mitigeur suivant la revendication 10 caractérisé en ce que la pièce (41) dévie l'eau mélangée vers des ouvertures latérales (50) du manchon (6).

12.- Mitigeur suivant l'une quelconque des revendications 1 à 11, caractérisé en ce que les ouvertures (31, 38, 39) des trois plaquettes (3 à 5) ont la forme de secteurs circulaires sur les faces en contact de celles-ci.

13.- Mitigeur suivant la revendication 10, caractérisé en ce que la pièce (152) dévie l'eau mélangée vers la sortie du mitigeur par l'intermédiaire d'un conduit d'axe X-X formé des ouvertures (139-138a-131a) des plaquettes (105-104-103).

14.- Mitigeur sanitaire suivant l'une quelconque

22

des revendications 1 à 10 et 13 caractérisé en ce que les plaquettes (103-104-105) comportent des ouvertures circulaires (131a-138a-139) centrées sur l'axe X-X et des ouvertures (131b-138b-139) en forme de portions de couronne circulaire centrée sur cet axe.

15.- Mitigeur sanitaire suivant l'une des revendications 12 et 14 caractérisé en ce que l'angle d'ouverture des secteurs circulaires (39) ou des portions de couronne circulaire (139) de la plaquette mobile supérieure (5-105) est plus petit que celui des ouvertures de la plaque mobile inférieure (4-104).

16.- Mitigeur suivant l'une quelconque des revendications 12, 14 et 15 caractérisé en ce que les bords (38a-238a, 39a-239) des ouvertures (38-138b, 39-139) des deux plaquettes mobiles (4-104, 5-105) associées en début d'ouverture du mitigeur sont décalés parallèlement au rayon correspondant de manière à être sensiblement parallèles lors de ce début d'ouverture.

17.- Mitigeur suivant l'une quelconque des revendications 1 à 16, caractérisé en ce qu'il comprend des éléments d'insonorisation en grillage fin (78) traversés par toute l'eau mélangée aux faibles débits et traversés par une fraction de cette eau aux grands débits.

PI. 1/10

0042523

FIG.1

47 46 45

48

49

50

6

51

50

68

52 54

53

55

56

57 58

42 41

40

39 5

37

38 4

74

32

31

3

71

29

24

27

22

23 2

18

19

17

35

34 36

FIG.2

PI. 3/10

0042523

FIG.4

FIG.6

FIG.3

FIG.7

FIG.5

FIG.12

0042523

FIG.9

FIG.10

FIG.11

FIG.8

# Pl. 5/10

## FIG.13

59

14                    14

62        60

60

## FIG.14

61        62

59

60

## FIG.15

64

63                    8

65

66

0042523

FIG.18a

FIG.18b

FIG.18c

FIG.17a

FIG.17b

FIG.17c

FIG.16

PI.7/10

0042523

FIG.19

FIG.20

FIG.21

**PI.8/10**

FIG.22

FIG.23

FIG.24

**Pl. 9/10**

0042523

**Fig. 25**

**Pl.10/10**

Fig. 26